# EUROPÄISCHE PATENTSCHRIFT

(11) **EP 1 951 916 B1**
(45) Veröffentlichungstag und Bekanntmachung des Hinweises auf die Patenterteilung: **19.12.2012**
(21) Anmeldenummer: 06806293.4
(22) Anmeldetag: 16.10.2006
(51) Int. Cl.: C21D 1/42, B21B 1/46, B21B 37/74, B21B 45/00, C21D 11/00, C21D 8/02, C21D 8/04

(54) **VERFAHREN UND FERTIGWALZSTRASSE ZUM WARMWALZEN VON EINGANGSMATERIAL**
METHOD AND FINISHING TRAIN FOR HOT-ROLLING STARTING MATERIAL
PROCEDE ET TRAIN DE LAMINOIR DE FINITION POUR LAMINER A CHAUD UN MATERIAU DE DEPART

(30) Priorität: 31.10.2005 DE 102005052375; 19.01.2006 DE 102006002505
(43) Veröffentlichungstag der Anmeldung: 06.08.2008
(73) Patentinhaber: SMS Siemag AG, 40237 Düsseldorf (DE)
(72) Erfinder: SEIDEL, Jürgen, 57223 Kreuztal (DE); PETERS, Matthias, 57223 Kreuztal (DE)
(74) Vertreter: Klüppel, Walter
(86) Internationale Anmeldenummer: PCT/EP2006/009954
(87) Internationale Veröffentlichungsnummer: WO 2007/051521

(56) Entgegenhaltungen:
- EP-A- 0 738 547
- EP-A- 0 771 596
- WO-A-89/11363
- WO-A-97/07905
- DE-A1- 4 402 402
- JP-A- 3 042 101
- US-A- 5 133 205
- DATABASE WPI Section Ch, Week 8049 Derwent Publications Ltd., London, GB; Class M,Seite 21, AN 87823C XP002472793 -& SU 728 955 A (A S FILATOV) 1. Mai 1980 (1980-05-01)

## Beschreibung

Die Erfindung betrifft ein Verfahren und eine Fertigwalzstraße zum Warmwalzen von Eingangsmaterial, insbesondere von Dünnbrammen oder von Vorbändern.

Ein derartiges Verfahren und eine entsprechende Fertigwalzstraße sind im Stand der Technik, z.B. aus der europäischen Patentschrift EP 0 415 987 B2, aus der US 5,133,205 und aus der WO 97/07905 bekannt. Es ist dort eine Fertigwalzstraße beschrieben, welche eine Mehrzahl von aufeinander folgenden Walzgerüsten umfasst. Die Walzgerüste dienen zum Warmwalzen von Eingangsmaterial zu Bandmaterial, welches zu Beginn auf eine Einlauftemperatur aufgeheizt ist, welche größer als eine gewünschte Endwalztemperatur am Ende der Fertigwalzstraße ist. Beim Durchlaufen der Fertigwalzstraße erfährt das Material aufgrund von Wärmeverlusten eine Abkühlung. Innerhalb der Fertigwalzstraße sind induktive Heizeinrichtungen vorgesehen zum Kompensieren der Wärmeverluste durch Wiederaufheizen des Materials soweit, dass die gewünschte Endwalztemperatur des Bandmaterials beim Verlassen der Walzstraße einen vorgegebenen unteren Schwellenwert nicht unterschreitet.

Die besagte europäische Patentschrift gibt keine näheren Informationen darüber, nach welchen Kriterien das Wiederaufheizen des Materials innerhalb der Fertig- und eine entsprechende bekannte Fertigwalzstraße dahingehend weiterzubilden, dass die dem Material innerhalb der Fertigwalzstraße zugeführte Energie zum Erreichen einer gewünschten Endwalztemperatur beim Verlassen der Fertigwalzstraße auf ein Minimum reduziert wird.

Diese Aufgabe wird durch das in Patentanspruch 1 beanspruchte Verfahren gelöst. Dieses Verfahren ist dadurch gekennzeichnet, dass zunächst - in Materialflussrichtung gesehen - diejenige Heizeinrichtung ermittelt wird, auf deren Höhe oder hinter welcher die Temperatur des Materials aufgrund der Wärmeverluste erstmals unter den unteren Temperaturschwellenwert zu sinken droht und dass das Wiederaufheizen des Materials erfolgt, indem die Temperatur des Materials mit Hilfe der ermittelten Heizeinrichtung nur soweit erhöht wird, dass die Temperatur während des Weitertransport des Materials bis zu der in Materialrichtung gesehen nächsten nachgeschalteten Heizeinrichtung - oder wenn in Materialflussrichtung keine weitere Heizeinrichtung mehr nachgeschaltet ist bis zum Verlassen der Fertigwalzstraße - aufgrund der jeweiligen lokalen Wärmeverluste in der Fertigwalzstraße nur bis auf den unteren Temperaturschwellenwert absinkt, und dass das Wiederaufheizen des Materials mit Hilfe jeder weiteren in Materialflussrichtung nachgeschalteten Heizeinrichtung innerhalb der Fertigwalzstraße wiederholt wird.

Vorteilhafterweise werden bei der beanspruchten Vorgehensweise das Temperatumiveau und die Temperaturschwankungen des Materials innerhalb der Fertigwalzstraße gering gehalten und auf diese Weise die innerhalb der Fertigwalzstraße zum Wiederaufheizen des Materials erforderliche Wärmeenergie und die dafür notwendigen Kosten auf ein Minimum reduziert. Die beanspruchte Art des Wiederaufheizens führt lediglich zu moderaten Temperaturerhöhungen und zu insgesamt relativ niedrigen Temperaturen in der gesamten Fertigwalzstraße, was auch bezüglich der Oberflächenqualität vorteilhaft ist. Im Vergleich zu einer Erwärmung des Einlaufmaterials vor Eintritt in die Fertigwalzstraße auf eine Einlauftemperatur, welche so hoch ist, dass die Temperatur des Materials auch bei Durchlaufen der gesamten Fertigwalzstraße mit ihren Wärmeverlusten nicht unter die gewünschte Endwalztemperatur absinkt, ist der erforderliche Wärmeinput bei dem beanspruchten Verfahren wesentlich geringer.

Gemäß einem Ausführungsbeispiel der Erfindung wird das Material beim Wiederaufheizen nicht über einen vorgegebenen oberen Temperaturschwellenwert aufgeheizt, so dass seine Temperatur nach dem erstmaligen Wiederaufheizen innerhalb der Fertigwalzstraße bis zum Verlassen der Fertigwalzstraße zumindest im Wesentlichen stets innerhalb eines Zieltemperaturbereiches verbleibt, der durch den unteren und den oberen Temperaturschwellenwert begrenzt ist. In diesem Zieltemperaturbereich findet ein quasi isothermes Walzen bei regelmäßigem Wiederaufheizen des Materials statt.

Der Zieltemperaturbereich wird für ein bestimmtes verwendetes Material (z. B. ULC-Stahl oder IF-Stahl) so gewählt, dass der Verlauf der mittleren Warmfließfestigkeit des verwendeten Materials über der Temperatur in dem Zieltemperaturbereich ein lokales Minimum aufweist. Das verwendete Material ist dann in dem Zieltemperaturbereich vorteilhafterweise besonders gut verformbar, was zur Beanspruchungsminderung der Walzstraße (Gerüste, Motoren etc.) sowie zur Verminderung der minimalen Enddicke genützt werden kann. Hierbei handelt es sich um ferritisches Walzen.

Im Hinblick auf ein gutes Walzergebnis, insbesondere gute Materialeigenschaften und eine gute Oberflächenqualität, ist es vorteilhaft, den unteren Temperaturschwellenwert materialabhängig vorzugeben.

Bei bestimmten Brammen- oder Bandanlagen kann es erforderlich sein, dass das Eingangsmaterial, bevor es in die Fertigwalzstraße eingebracht wird, mit Hilfe einer zusätzlichen Vorab-Heizeinrichtung auf eine Einlauftemperatur oberhalb des unteren Temperaturschwellenwertes aufgeheizt wird. Dies kann dann erforderlich sein, wenn die Temperaturen des Materials, wenn es aus dem Ofen oder einer Gießanlage austritt, besonders niedrig sind oder wenn die Gießgeschwindigkeit und/oder der Abstand zwischen einer Strangführungseinrichtung und der Fertigwalzstraße besonders groß ist und das Material dann bis zum Eintritt in die Fertigwalzstraße auf eine Eintauftemperatur unterhalb des unteren Temperaturschwellenwertes abkühlen würde. In diesen Fällen dient die Vorab-Heizeinrichtung dazu, diese Wärmeverluste vor Eintritt in die Fertigwalzstraße zumindest teilweise zu kompensieren. Alternativ oder zusätzlich kann die Vorab-Heizeinrichtung auch dazu verwendet werden, einem Absinken der Temperatur des Materials unter den unteren Schwellenwert im Eingangsbereich der Fertigwalzstraße vorzubeugen, wenn dort im Hinblick auf eine gewünschte gute Oberflächenqualität Entzunderungseinrichtungen bzw. Zwischengerüstkühteinrichtungen vorgesehen sind, die eine besonders starke Abkühlung des Materials bewirken.

Die von den einzelnen Heizeinrichtungen zwischen den Walzgerüsten der Fertigwalzstraße auf das durchlaufende Material zu übertragenden Wärmemengen werden vorteilhafterweise mit Hilfe eines Rechenmodells für jede der Heizeinrichtungen individuell vorausberechnet. Die Vorausberechnung erfolgt unter Berücksichtigung bekannter Wärmeverluste, wie sie insbesondere bei dem Transport des Materials zwischen aufeinander folgenden Walzgerüsten oder zwischen aufeinander folgenden Heizeinrichtungen und beim Durchlaufen der einzelnen Walzgerüste auftreten. Das Rechenmodell berücksichtigt vorteilhafterweise herstellerseitig vorgegebene materialbedingte, mechanische oder elektronische Beschränkungen für die Walzgerüste der Fertigstraße, für die Heizeinrichtungen sowie zulässige Bereiche für den Walzprozess. Um diese vorgegebenen Beschränkungen einzuhalten, wertet das Rechenmodell zahlreiche Prozessparameter aus.

Das Rechenmodell kann ausgebildet sein, die von den einzelnen Heizeinrichtungen jeweils auf das Material zu übertragenden Wärmemengen entweder auf Basis einer Vorwärtsberechnung in Materialflussrichtung oder einer Rückwärtsberechnung, ausgehend von der gewünschten Endwalztemperatur des Bandmaterials am Ausgang der Fertigwalzstraße, entgegen der Materialflussrichtung iterativ zu berechnen.

Die Berechnung der zu erzeugenden bzw. auf das Material zu übertragende Wärmemengen erfolgt grundsätzlich im Vorfeld eines Fertigwalzprozesses.

Vorteilhafterweise ist das Rechenmodell jedoch auch ausgebildet, Veränderungen von Prozessparametem, die während eines Fertigwalzprozesses erkannt werden, durch eine Eigenädaption Rechnung zu tragen.

Die seitlichen Kanten des Eingangsmaterials liegen typischerweise seit einem Austritt des Materials aus einer Gießkokille frei und fungieren insofern als Wärmeabstrahlfläche. Außerdem läuft an den Kanten das gesamte Kühlwasser, welches zum Beispiel während einer Entzunderung des Eingangsmaterials auf dessen breitseitige Oberfläche aufgebracht wird, herunter, wodurch sie zusätzlich stark abgekühlt werden. Im Ergebnis ist das Eingangsmaterial deshalb vor seinem Eintritt in die Fertigwalzstraße an seinen Kanten typischerweise stärker abgekühlt als in seiner Mitte. Allerdings ist es gewünscht, dass das Material spätestens beim Verlassen der Fertigwalzstraße möglichst überall - auch quer zur Materialflussrichtung - gleichmäßig aufgeheizt ist. Um dies zu erreichen schlägt die vorliegende Erfindung vor, die Heizeinrichtungen für das Wiederaufheizen des Materials innerhalb der Fertigwalzstraße bandkantenorientiert zu positionieren und über das Rechenmodell so anzusteuern, dass die beim Einlauf unterkühlten Kanten des Materials stärker erwärmt werden als die Mitte des Materials, so dass das Material spätestens bei Verlassen der Fertigwalzstraße auch in Querrichtung gleichmäßig erwärmt ist.

In der Praxis hat es sich bewährt, dass Wiederaufheizen mit induktiven Heizeinrichtungen durchzuführen, weil diese zum Beispiel im Unterschied zu Brennern eine stärkere Aufheizung des Materials auf kurzer Strecke und zugleich auch eine homogenere bzw. gezielte Verteilung der eingebrachten Wärme in das Material ermöglichen.

Der Beschreibung sind insgesamt 7 Figuren beigefügt, wobei
- Figur 1: einen Überblick über eine Brammenanlage mit einer Fertigwalzstraße gemäß der vorliegenden Erfindung mit den Komponenten der Steuereinheit (Rechenmodell);
- Figur 2: das erfindungsgemäße Verfahren;
- Figur 3: die Effizienz des erfindungsgemäßen Verfahrens gegenüber einem aus dem Stand der Technik bekannten Verfahren;
- Figur 4: eine Variante des erfindungsgemäßen Verfahrens;
- Figur 5: den Verlauf der mittleren Warmfließfestigkeit für verschiedene Stähle in Abhängigkeit der Temperatur;
- Figur 6: ein Ausführungsbeispiel für eine bandkantenpositionierte Heizeinrichtung zum Wiederaufheizen des Materials; und
- Figur 7: verschiedene Temperaturverläufe über der Breite des Materials mit unterschiedlicher Bandkantentemperatur, wobei diese Temperaturverläufe die von einer Heizeinrichtung auf das Material zu übertragende Wärmeverteilung repräsentieren;
veranschaulicht.

Die Erfindung wird nachfolgend unter Bezugnahme auf die genannten Figuren in Form von Ausführungsbeispielen detailliert beschrieben.

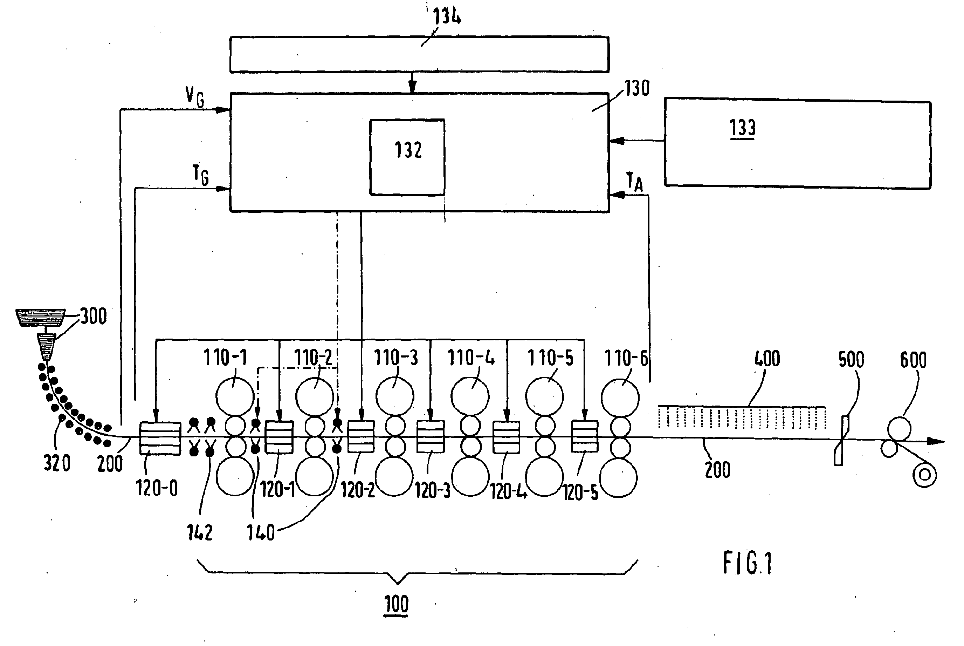

Figur 1 zeigt eine Brammenanlage, welche in Materialflussrichtung (Pfeilrichtung) umfasst: Eine Gießmaschine 300 zum Gießen eines Gießstrangs, eine Strangführungseinrichtung 320 zum Führen des gegossenen Gießstrangs aus der Vertikalen in die Horizontale, eine Fertigwalzstraße 100 zum Fertigwalzen des Gießstrangs in Form von Eingangsmaterial zu einem Bandmaterial, eine Kühlstrecke 400 zum Kühlen des fertig gewalzten Bandmaterials, eine Schere 500 zum Trennen des typischerweise endlosen Bandmaterials und schließlich eine von mehreren Haspeleinrichtungen 600 zum Aufwickeln des durch die Schere 160 zugeschnittenen Bandmaterials.

Die Fertigwalzstraße 100 besteht primär aus in Materialflussrichtung hintereinander angeordneten Walzgerüsten 110 - n mit n = 1 - N und zwischen den einzelnen Walzgerüsten 110 - n angeordneten Heizeinrichtungen 120 - k mit k = 1 - K. In Einzelfällen kann der Fertigwalzstraße 100 eine Vorab-Heizeinrichtung 120 - 0 vorgeschaltet sein. Dies ist typischerweise zum Beispiel dann der Fall, wenn mit niedrigen Austrittstemperaturen aus der Gießmaschine zu rechnen ist oder Zwischengerüstkühleinrichtungen 140 zwischen den ersten Walzgerüsten der Fertigwalzstraße vorgesehen sind.

Weiterhin ist in Figur 1 zu erkennen, dass der Fertigwalzstraße 100 eine Steuereinrichtung 130 zugeordnet ist zum Ansteuern von den Heizeinrichtungen 120 - k und den Zwischengerüstkühleinrichtungen 140. Gemäß der vorliegenden Erfindung ist die Steuereinrichtung 130 nicht nur ausgebildet, die besagten Einrichtungen ein- oder auszuschalten, sondern bei den Zwischengerüstkühleinrichtungen die individuelle Kühlintensität durch Regulieren der ausgegebenen Wassermenge oder bei den Heizeinrichtungen 120 - k die von diesen auf das Material zu übertragende Wärmemenge individuell einzustellen. Die Entscheidungen über das Ein- und Ausschalten der genannten Einrichtungen sowie über die einzustellenden Kühl- und Wärmeleistungen entscheidet die Steuereinrichtung 130 mit Hilfe eines Rechenmodells 132, welches zur Entscheidungsfindung insbesondere die Wärmeverluste innerhalb der Fertigwalzstraße berücksichtigt. Bei diesen Wärmeverlusten handelt es sich primär um die Wärmeverluste die beim Transport des Materials 200 zwischen aufeinander folgenden Gerüsten 110 - n oder zwischen aufeinander folgenden Heizeinrichtungen 120 - k und beim Durchlaufen der Walzgerüste 110 - n auftreten. Das Rechenmodell 132 berücksichtigt weiterhin für die Stichplanfindung sowie die Ansteuerung der genannten Einrichtungen die vorgegebene mechanische, materialbedingte oder elektronische Begrenzung für die Walzgerüste 110 - n, die Heizeinrichtungen 120 - k sowie vorgegebne Begrenzungen für den Walzprozess. Konkret berechnet das Rechenmodell 132 die Wärmeveduste auf Basis einer Vielzahl vorgegebener Prozessparameter, zum Beispiel der Art des verwendeten Eingangsmaterials, d.h. zum Beispiel der verwendeten Stahlart oder der Art des verwendeten Aluminiums, der Dicke des Eingangsmaterials 200, der Gießgeschwindigkeit V_{G}, der Temperatur T_{G} hinter der Strangführungseinrichtung 320, der Anzahl N der Walzgerüste in der Fertigwalzstraße 100, dem Abstand der Gerüsten oder dem Abstand der Heizeinrichtungen 120 untereinander, der Temperatur T_{A} des Bandmaterials am Ausgang der Fertigwalzstraße, der maximal möglichen Kühlleistung der Zwischengerüstkühleinrichtungen 140, vorgegebener erhöhter Temperaturvorgaben für die Kanten des Materials und optional auch unter Berücksichtigung jeweils aktuell gemessener Temperaturwerte zwischen den Gerüsten 110 - n.

Die oben erwähnten von dem Rechenmodell 132 berücksichtigten Begrenzungen für die Walzgerüste, die Heizeinrichtungen und die Zwischengerüstkühleinrichtungen sind in Figur 1 mit den Bezugzeichen 133 symbolisiert, während die prozessabhängigen Parameter für die Art des verwendeten Materials oder die Dicke des Eingangsmaterials, die Gießgeschwindigkeit, etc. mit den Bezugzeichen 134 symbolisiert sind.

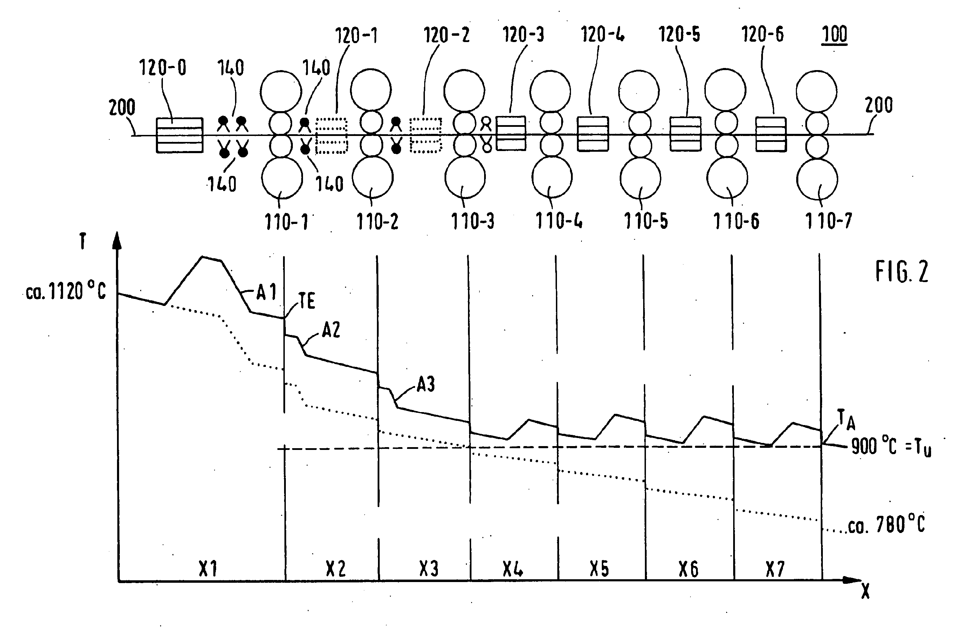

Figur 2 veranschaulicht das erfindungsgemäße Verfahren zum Warmwalzen des Eingangsmaterials für die soeben beschriebene Fertigwalzstraße 100.

Das Verfahren ist besonders gut geeignet für Eingangsmaterial 200 in Form von Dünnbrammen mit einer Dicke von 120 bis 50 mm oder von Vorbändem. Diese sind, wenn sie in die Fertigwalzstraße 100 transportiert werden, erfindungsgemäß vorausgesetzt, auf eine Einlauftemperatur T_{E} oberhalb eines vorgegebenen unteren Temperaturschwellenwertes T_{U} aufgeheizt. Der untere Temperaturschwellenwert T_{U} wird materialabhängig vorgegeben. So wird er beispielsweise für austenitisch gewalzte Stähle auf ca. 900 °C und für ferritisch gewalzte Stähle auf ca. 800 °C eingestellt. Das Eingangsinaterial 200 wird dann in den mehreren aufeinander folgenden Walzgerüsten 110 - 1 ... - 7 zu Bandmaterial fertig gewalzt, wobei es aufgrund von Wärmeverlusten innerhalb der Fertigwalzstraße gegenüber der Einlauftemperatur T_{E} abkühlt. Der Verlauf der mittleren Temperatur T des Materials beim Durchlaufen durch die Fertigwatzstraße 100 ist in Figur 2 graphisch dargestellt. Dabei sind die Wärmeverluste des Materials grundsätzlich durch die Verlaufsabschnitte mit negativer Steigung dargestellt, während eine Temperaturzufuhr durch eine der Heizeinrichtungen durch Verlaufsabschnitte mit positiver Steigung dargestellt ist. Die stark abfallenden Abschnitte A1, A2 und A3 innerhalb der Streckenabschnitte X1, X2 und X3 sind auf eine Aktivierung der Entzunderungseinrichtung 142 bzw. der Zwischengerüstkühteinrichtung 140 zurückzuführen, die vorteilhafterweise eingeschaltet werden, um eine besonders gute Oberflächenqualität bei dem gewalztem Material zu erzielen.

Weiterhin ist in Figur 2 zu erkennen, dass die Wärmeverluste, d.h. der Temperaturabfall des Materials beim Durchlaufen der Watzgerüste 110 besonders groß ist, was durch jeweils einen Sprung im Temperaturverlauf gemäß Figur 2 dargestellt ist. Ursache für diese starken Temperatursprünge ist die Tatsache, dass das Material beim Durchlaufen der Walzgerüste sehr viel Wärme an die jeweiligen Arbeitswalzen abgibt.

Die in Figur 2 dargestellte punktierte Linie repräsentiert den Temperaturverlauf des Materials in Materialflussrichtung innerhalb der Fertigwalzstraße ohne Aktivierung einer der Heizeinrichtungen 120 - k zwischen den Walzgerüsten, d.h. auch ohne Anwendung des erfindungsgemäßen Verfahrens. Die sich dabei einstellende Endwalztemperatur ist für die austenitische Walzung zu niedrig und liegt unterhalb des Temperaturschwellwertes T_{U}. Demgegenüber zeigt die durchgezogene schwarze Kurve den Temperaturverlauf des Materials bei Anwendung des erfindungsgemäßen Verfahrens. Dieses sieht vor, dass zunächst - in Materialflussrichtung gesehen - diejenige Heizeinrichtung ermittelt wird, auf deren Höhe oder hinter welcher die Temperatur des Materials 200 aufgrund der Wärmeverluste erstmals unter den unteren Temperaturschwellenwert T_{U} zu sinken droht. Dieser untere Temperaturschwellenwert T_{U} ist in Figur 2 durch eine horizontale gestrichelte Linie angedeutet und beispielhaft auf 900°C festgesetzt. In Figur 2 droht die schwarze Kurve zwischen den Walzgerüsten 110 - 3 und 110 - 4, d.h. im Bereich X4 erstmals unter diesen unteren Temperaturschwellenwert T_{U} zu sinken, wenn dieser drohende Abfall nicht kompensiert würde. Genau eine solche Kompensation wird durch das erfindungsgemäße Verfahren vorgesehen, indem die Temperatur des Materials mit Hilfe der in diesem Positionsbereich X4 angeordneten Heizeinrichtung 120 - 3 erhöht wird, um ein Absinken der Temperatur unter den unteren Temperaturschwellenwert zu verhindern. Allerdings erfolgt die dortige Erhöhung der Temperatur nicht beliebig, sondern im Hinblick auf eine Minimierung der zugeführten Energie nur soweit wie nötig, d.h. nur soweit, dass die Temperatur des Materials während des Weitertransports des Materials innerhalb der Fertigwalzstraße bis zu der in Materialsfluss Richtung gesehen nächsten nachgeschalteten Heizeinrichtung, hier der Heizeinrichtung 120 - 4, aufgrund der jeweiligen lokalen Wärmeverluste in der Fertigwalzstraße nur bis auf den unteren Temperaturschwellenwert Tu, nicht aber darunter, absinkt. Bei der nachgeschalteten Heizeinrichtung 120 - 4 sowie bei allen weiteren nachgeschalteten Heizeinrichtungen 120 - 5, 120 - 6 innerhalb der Fertigwalzstraße 100 wird dann das beschriebene erfindungsgemäße Aufheizen des Materials jeweils wiederholt, so dass das fertig gewalzte Bandmaterial 200 am Ausgang der Fertigwalzstraße 100 eine Temperatur in Höhe der gewünschten Endwalztemperatur T_{A}, d.h. in etwa in Höhe des vorgegebenen unteren Temperaturschwellenwertes T_{U} aufweist. Anders als bei den Heizeinrichtungen 120 - 3, 120 - 4 und 120 - 5 innerhalb der Fertigwalzstraße 100 kann die von der letzten Heizeinrichtung 120 - 6 der Fertigwalzstraße aufzubringende Wärmemenge etwas geringer eingestellt werden, weil diese Heizeinrichtung nicht mehr die Wärmeverluste zwischen dem letzten Walzengerüst 110 - 7 und einer (nicht vorhandenen) diesem nachgeschalteten Heizeinrichtung kompensieren muss.

Bei dem in Figur 2 gezeigten Ausführungsbeispiel sind die Heizeinrichtungen 120 - 1 und 120 - 2 innerhalb der Fertigwalzstraße abgeschaltet, weil dort eine Zwischengerüstkühlung zu Gunsten einer verbesserten Oberfläche des Materials erfolgt. Das erfindungsgemäße Verfahren zur Ansteuerung der Heizeinrichtungen findet demnach lediglich bei den Heizeinrichtungen 120 - 3 ... 6 in Figur 2 Anwendung. Die Vorab-Heizeinrichtung 120 - 0 dient dazu, das Material 200 auf eine solche Temperatur aufzuheizen, dass die Temperatur des Materials beim Durchlaufen der Entzunderungseinrichtung 142 und der Zwischengerüstkühleinrichtung 140, d.h. beim Durchlaufen der Positionsbereiche X1, X2 und X3, nicht unter den unteren Temperaturschwellenwert T_{U}, absinkt.

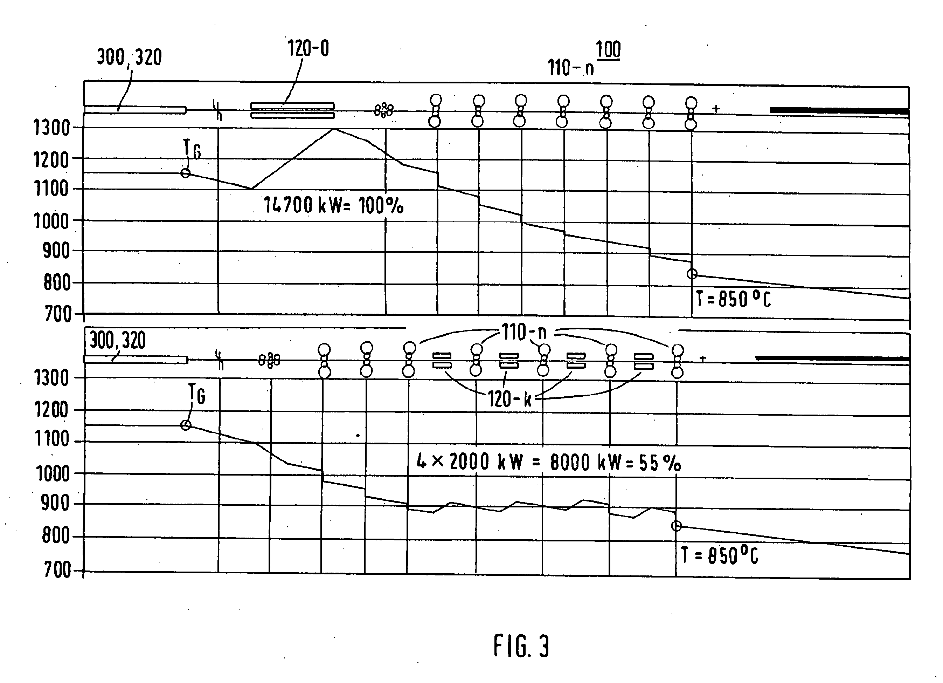

In Figur 3 ist die eriergetisch günstigere Wirkungsweise des erfindungsgemäßn Verfahrens gegenüber einem aus dem Stand der Technik bekannten Verfahren illustriert. Das aus dem Stand der Technik bekannte Verfahren ist in der oberen Hälfte in Figur 3 dargestellt und sieht vor, dass das Material ausgehend von einer Temperatur T_{G} von 1150 °C am Ausgang der Gießmaschine 300 bzw. der Strangführungseinrichtung 320 in einer Vorab-Heizeinrichtung 120 - 0 soweit aufgeheizt wird, dass es beim nachfolgenden Durchlaufen der gesamten Fertigwalzstraße 100 ohne ein Wiederaufheizen innerhalb der Fertigwalzstraße am Ausgang der Fertigwalzstraße 100 nicht unter eine Endwalztemperatur von 850°C abkühlt. Für das beschriebene Aufheizen des Materials innerhalb der Vorab-Heizeinrichtung 120 - 0 wird in dem Beispiel eine Leistung von 14700 kW benötigt..

Demgegenüber ist in der unteren Hälfte von Figur 3 der Temperaturverlauf gemäß dem erfindungsgemäßen Verfahren dargestellt. Bei gleichen Randbedingungen und ausgehend von derselben Temperatur T_{G} am Ausgang der Gießmaschine 300 bzw. der Strangführungseinrichtung 320 von 1150 °C führt er ebenfalls zu der gewünschten Endwalztemperatur von 850 °C am Ausgang der selben Fertigungswalzstraße 100. Im Unterschied zu der oberen Abbildung erfolgt bei der unteren Darstellung keine Vorab-Aufheizung des Materials vor Eintritt in die Fertigwalzstraße; sondern ein wiederholtes Wiederaufheizen des Materials gemäß dem erfindungsgemäßen Verfahren mit Hilfe der Heizeinrichtungen 120 - k zwischen den Walzgerüsten 110 - n. Wie in der unteren Abbildung dargestellt ist, ist für die Erzielung der gleichen Endwalztemperatur am Ausgang der Walzstraße bei dem erfindungsgemäßen Verfahren lediglich eine Wärmezufuhr in Höhe von 8000 kW erforderlich, was lediglich 55 % der bei dem zuvor beschriebenen Verfahren aus dem Stand der Technik aufzuwendenden Wärmeenergie entspricht.

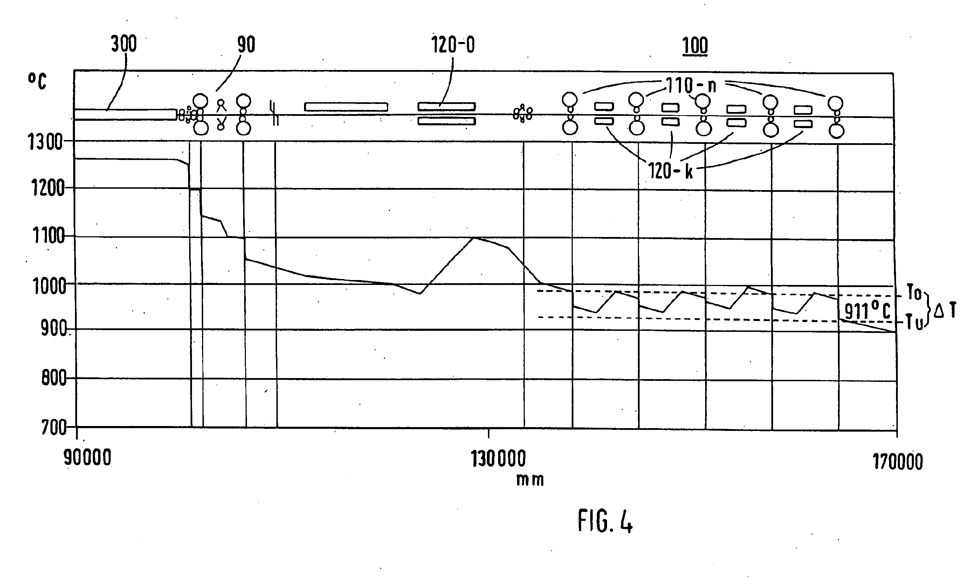

Figur 4 stellt eine Walzstraße, bestehend aus einer Vorvertormungsgruppe 90 und Fertiggerüsten 110-n dar. Es sind induktive Heizeinrichtungen 120-0, 120-k zwischen der Vorverformungsgruppe und der Fertigstraße sowie innerhalb der Fertigstraße angeordnet. Die induktive Heizeinrichtung 120-0 vor der Fertigstraße dient der Voreinstellung der Einlauftemperatur, um auf verschiedene Randbedingungsänderungen (Gießtemperatur oder auf Geschwindigkeit) reagieren und so die Eingangstemperatur in die Fertigstraße 110-n konstant halten zu können, was das vorgestellte Verfahren unterstützt.

Figur 4 zeigt weiterhin eine Variante des erfindungsgemäßen Verfahrens, welche darin besteht, dass die Temperatur beim Wiederaufheizen des Materials mit Hilfe der Heizeinrichtungen 120 - k durch einen vorgegebenen oberen absoluten Temperaturschwellenwert T_{O} begrenzt ist. Bei dieser Variante des erfindungsgemäßen Verfahrens bewegt sich dann die Temperatur des Materials innerhalb der Fertigstraße 100 beim erfindungsgemäßen wiederholten Wiederaufheizen lediglich in einem durch die Differenz zwischen dem oberen und dem unteren Temperaturschwellenwert gebildeten Zieltemperaturbereich Δ T. Es findet dann ein quasi isothermes Walzen des Materials statt; ein solcher Zieltemperaturbereich ist in Figur 4 anschaulich dargestellt.

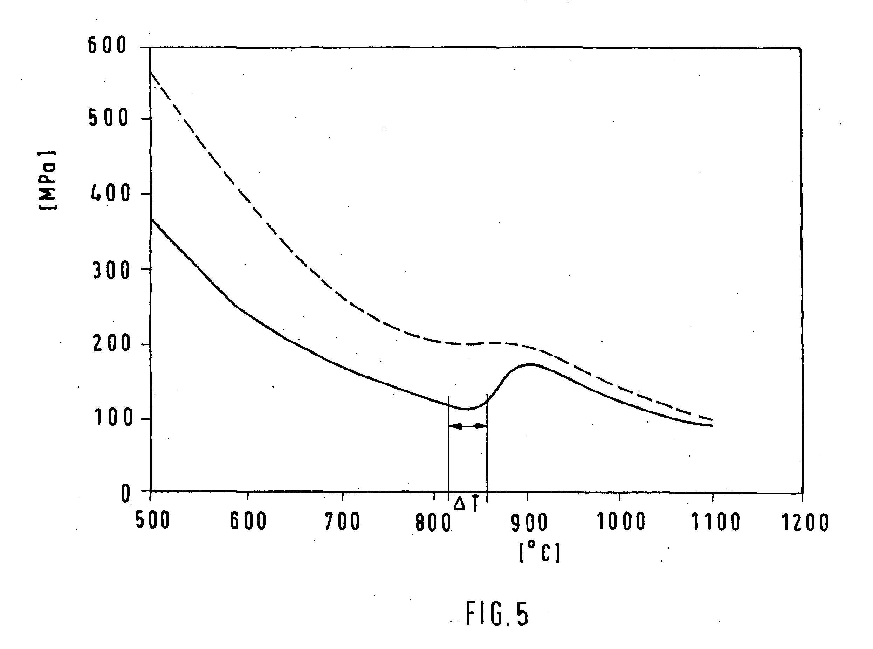

Der Zieltemperaturbereich Δ T wird vorzugsweise auch so gewählt, dass das jeweils verwendete Material in diesem Zieltemperaturbereich gute Materialeigenschaften und/oder möglichst gute Umformbarkeit aufweist. Eine solche besonders gute Umformbarkeit zeigt beispielsweise ein Material dort, wo der Verlauf seiner mittleren Warmfließgeschwindigkeit über der Temperatur mathematisch gesprochen ein lokales Minimum aufweist. In Figur 5 sind die Verläufe der mittleren Warmfließfestigkeit über der Temperatur für zwei verschiedene Stahlarten gezeigt, wobei die punktierte Kurve die Warmfließfestigkeit für einen normalen C-Stahl und die durchgezogene Kurve die Warmfließfestigkeit für einen ULC-Stahl repräsentiert. Es ist zu erkennen, dass die durchgezogene Kurve für den ULC-Stahl im Bereich von ca. 820 bis 860 °C ein lokales Minimum aufweist, das beim ferritischen Walzen mit diesem Verfahren in positiver Weise ausgenutzt werden kann.

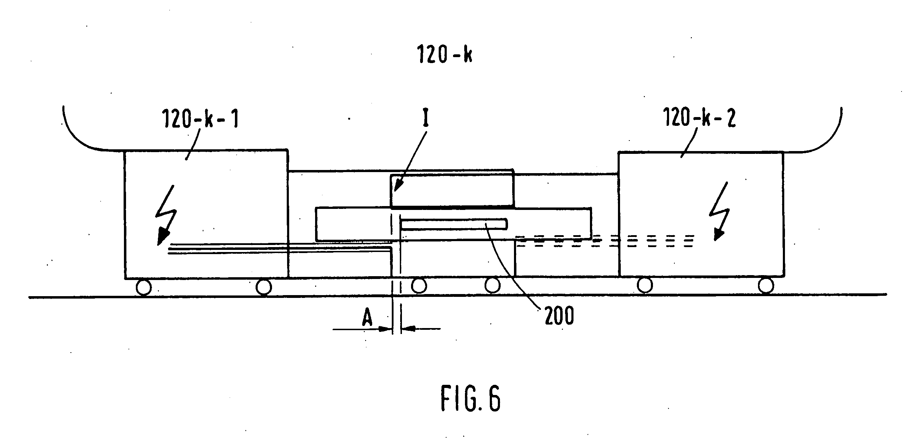

Figur 6 zeigt ein Ausführungsbeispiel für eine induktive Heizeinrichtung 120 - k. Die Heizeinrichtung ist zweigeteilt aufgebaut mit einem Induktor 120 - k - 1 auf einer Bedienerseite und einem Induktor 120 - k - 2 auf einer Motorseite. Die beiden Induktoren werden bei Bedarf von rechts bzw. von links in die Linie der Fertigwalzstraße überlappend eingefahren, so dass dann schließlich die Induktionsspulen I über den Breitseiten des Materials 200 angeordnet sind. Die Induktorköpfe der Induktoren werden bandkantenorientiert eingestellt und sind hintereinander als Pärchen angeordnet. Dabei bedeutet die bandkantenorientierte Positionierung, dass die Induktorköpfe über die Breite des Materials hinaus, zum Beispiel mit einem Abstand A von der Kante des Materials entfernt eingestellt werden.

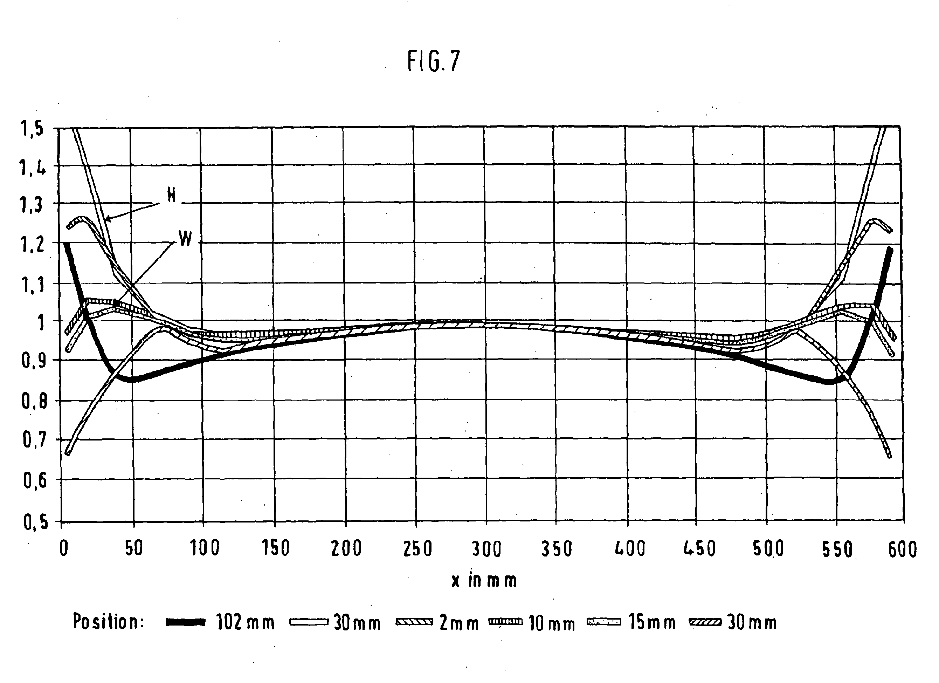

Erfindungsgemäß werden die Heizeinrichtungen 120 - k dann von der Steuereinrichtung 130 so angesteuert, dass zum Beispiel eine in Figur 7 gezeigte Verteilung der Temperaturzufuhr über der Breite des Materials, d.h. quer zur Materialflussrichtung erzielt wird. In Figur 7 ist zu erkennen, dass bei den Kanten des Materials 200 aufgrund der geeigneten Ansteuerung der Heizeinrichtungen und deren bandkantenorientierter Positionierung eine Querfelderwärmung mit der Besonderheit erreicht wird, dass die Kanten des Materials 200, wie in Figur 7 gezeigt, gegenüber der Mitte des Materials relativ stärker aufgeheizt werden; siehe Bezugzeichen H in Figur 7. Unter Berücksichtigung einer besonders starken Abkühlung der Kanten des Materials vor seinem Eintritt in die Fertigwalzstraße resultiert dann eine relativ gleichmäßige Wärmeverteilung über der Breite des Materials beim Verlassen der Fertigwalzstraße. Eine relativ gleichmäßige Erwärmung des Materials über der Breite stellt dagegen der Verlauf der Kurve W in Figur 7 dar. In Figur 7 ist die Wirkung bzw. das Verhältnis von Bandkantentemperatur zur Bandmittentemperatur über der Breite des Materials 200 quer zur Materialflussrichtung für verschiedene Positionen A der Induktorköpfe aufgetragen.

Die gezielte induktive Einstellung der Bandkantentemperatur innerhalb der Fertigstraße kann zusätzlich oder alternativ zur Beeinflussung der Bandplanheit und des Bandprofils genutzt werden. Besonders bei austenitischem Edelstahl sind die Beeinflussung der Bandkantentemperatur und damit die Bandform im großen Bereich möglich. Die Einflüsse werden in einem Profil-, Kontur- und Planheitsmodell beschrieben und die Position der induktiven Heizungen abhängig der Modellvorgaben gezielt eingesetzt.

## Patentansprüche

1. Verfahren zum Warmwalzen von Eingangsmaterial (200) für eine Fertigwalzstraße (100), insbesondere von Dünnbrammen oder von Vorbändem, umfassend folgende Schritte:
Einbringen des Eingangsmaterials (200) aufgeheizt auf eine Einlauftemperatur (T_{E}) oberhalb eines vorgegebenen unteren Temperaturschwellenwertes (T_{U}) in die Fertigwalzstraße;
Walzen des aufgeheizten Eingangsmaterials (200) in mehreren aufeinander folgenden Walzgerüsten (110 - n) der Fertigwalzstraße zu Bandmaterial, insbesondere zu Stahlband, wobei das Material aufgrund von Wärmeverlusten in der Fertigwalzstraße (100) gegenüber der Einlauftemperatur (T_{E}) abgekühlt wird; und
Kompensieren der Wärmeverluste durch Wiederaufheizen des Materials zumindest zwischen einzelnen der aufeinander folgenden Walzgerüste (110 - n) mit Hilfe von Heizeinrichtungen (120 - k) soweit, dass die Temperatur innerhalb der Walzstraße und die Endwalztemperatur (T_{A}) des Bandmaterials beim Verlassen der Fertigwalzstraße (100) den vorgegebenen unteren Temperaturschwellenwert (T_{U}) nicht unterschreitet;
**dadurch gekennzeichnet,**
**dass** zunächst - in Materialflussrichtung gesehen - mit Hilfe eines Rechenmodells (132) und/oder aufgrund von Temperaturmesswerten aus dem Inneren der Fertigwalzstraße diejenige Heizeinrichtung (120-k) ermittelt wird, auf deren Höhe oder hinter welcher die Temperatur des Materials aufgrund der Wärmeverluste erstmals unter den unteren Temperaturschwellenwert (T_{U}) zu sinken droht; und
**dass** das Wiederaufheizen des Materials mit Hilfe des Rechenmodells vorausberechnet bzw. erfolgt, indem die Temperatur des Materials mit Hilfe der ermittelten Heizeinrichtung (120 - k) nur soweit erhöht wird, dass die Temperatur während des Weitertransports des Materials bis zu der in Materialflussrichtung gesehen nächsten nachgeschalteten Heizeinrichtung (120 - [k + 1]) - oder wenn in Materialflussrichtung keine weitere Heizeinrichtung mehr nachgeschaltet ist bis zum Verlassen der Fertigwalzstraße (100) - aufgrund der jeweiligen lokalen Wärmeverluste in der Fertigstraße nur bis auf den unteren Temperaturschwellenwert (T_{U}) absinkt; und
**dass** das Wiederaufheizen des Materials mit Hilfe jeder weiteren in Materialflussrichtung nachgeschalteten Heizeinrichtung innerhalb der Fertigwalzstraße wiederholt wird.

2. Verfahren nach einem der vorangegangenen Ansprüche,
**dadurch gekennzeichnet,**
**dass** die Temperatur des Materials beim Wiederaufheizen innerhalb der Walzstraße nicht über einen vorgegebenen oberen Temperaturschwellenwert (T_{O}), der über dem unteren Temperaturschwellenwert (T_{U}) liegt, hinaus angehoben wird und damit in einem Zieltemperaturbereich (Δ T) zwischen dem unteren und dem oberen Temperaturschwellenwert verbleibt.

3. Verfahren nach Anspruch 2,
**dadurch gekennzeichnet,**
**dass** der Zieltemperaturbereich (Δ T) je nach Art des verwendeten Materials so gewählt wird, dass der Verlauf der mittleren Warmfließfestigkeit über der Temperatur für das verwendete Material in dem Zieltemperaturbereich mathematisch gesprochen ein lokales Minimum aufweist.

4. Verfahren nach einem der vorangegangenen Ansprüche,
**dadurch gekennzeichnet,**
**dass** der untere Temperaturschwellenwert (T_{U}) materialabhängig vorgegeben und z. B. für niedrig gekohlte austenitisch gewalzte Stähle auf ca. 900° C und für ferritisch gewalzte Stähle auf ca. 800°C eingestellt wird.

5. Verfahren nach einem der vorangegangenen Ansprüche,
**dadurch gekennzeichnet,**
**dass** das Eingangsmaterial (200), bevor es in die Fertigwalzstraße (100) eingebracht wird, erfordedichenfalls mit Hilfe einer Vorab-Heizeinrichtung (120 - 0) auf die Einlauftemperatur (T_{E}) oberhalb des unteren Temperaturschwellenwertes (T_{U}) aufgeheizt wird.

6. Verfahren nach Anspruch 5,
**dadurch gekennzeichnet,**
**dass** - wenn zwischen den in Materialflussrichtung gesehen ersten Walzgerüsten (110 - 1, 110 - 2, 110 - 3) der Fertigwalzstraße eine Zwischenkühlung (140) des Materials (200) stattfindet - das Eingangsmaterial, bevor es in die Fertigwalzstraße eingebracht wird, mit Hilfe der Vorab-Heizeinrichtung (120 - 0) auf eine solche Einlauftemperatur (T_{E}) aufgeheizt wird, dass das Material während seines Transportes durch den Bereich der Zwischengerüstkühlung (140) bis zum Erreichen einer in Materialflussrichtung nachgeschalteten nächsten Heizeinrichtung (120 - 3) hinter dem Bereich der Zwischengerüstkühtung nicht unter den unteren Temperaturschwellenwert (T_{U}) abgekühlt wird.

7. Verfahren nach einem der vorangegangenen Ansprüche
**dadurch gekennzeichnet,**
**dass** die Ermittelung des Heizniveaus auf deren Höhe oder hinter welcher die Temperatur des Materials aufgrund der Wärmeverluste erstmals unter den unteren Temperaturschwellenwert (T_{U}) zu sinken droht, mit Hilfe eines Rechenmodells (132) und / oder aufgrund von Temperaturmesswerten aus dem Innern der Fertigwalzstraße berechnet wird.

8. Verfahren nach einem der vorangegangenen Ansprüche,
**dadurch gekennzeichnet,**
**dass** die für einen Wiederaufheizvorgang von einer der Heizeinrichtungen (120 - k) individuell jeweils auf das durchlaufende Material zu übertragende Wärmemenge mit Hilfe eines Rechenmodells (132) unter Berücksichtigung der Wärmeverluste, wie sie insbesondere bei dem Transport des Materials zwischen aufeinander folgenden Walzgerüsten (110 - n) oder zwischen aufeinander folgenden Heizeinrichtungen (120 - k) und beim Durchlaufen der Walzgerüste auftreten, vor Beginn des Walzbetriebs vorausberechnet wird.

9. Verfahren nach Anspruch 8,
**dadurch gekennzeichnet,**
**dass** das Rechenmodell (132) die Wärmeverluste berechnet unter Berücksichtigung vorgegebener Begrenzungen (133) für die Walzgerüste der Fertigwalzstraße, für die Heizeinrichtungen sowie für den Walzprozess auf Basis vorgegebener Prozessparameter, wie der Art des verwendeten Eingangsmaterial, z.B. der verwendeten Stahlart oder der Art des verwendeten Aluminiums, der Dicke des Eingangsmaterials, der Gießgeschwindigkeit, der Anzahl der Walzgerüste in der Fertigwalzstraße, dem Abstand der Gerüste oder der Heizeinrichtungen untereinander, der gemessenen Temperatur des Eingangsmaterials am Ausgang einer Strangführungseinrichtung (320) und des Bandmaterials am Ausgang der Fertigwalzstraße, ggf. der Kühlleistung der Zwischengerüstkühlungseinrichtungen (140), optional gemessener Temperaturwerte zwischen den Gerüsten und/oder vorgegebener erhöhter Temperaturvorgaben für die Kanten des Materials, etc.

10. Verfahren nach Anspruch 7,8 oder 9,
**dadurch gekennzeichnet,**
**dass** das Rechenmodell (132) die erste Heizeinrichtung oder die von den einzelnen Heizeinrichtungen (120 - k) jeweils auf das Material (200) zu übertragende Wärmemenge entweder auf Basis einer Vorwärtsberechnung in Materialflussrichtung oder einer Rückwärtsberechnung beginnend mit der Endwalztemperatur (T_{A}) des Bandmaterials am Ausgang der Fertigwalzstraße (100) entgegen der Materialflussrichtung iterativ berechnet.

11. Verfahren nach einem der vorangegangenen Ansprüche 7 bis 10,
**dadurch gekennzeichnet,**
**dass** das Rechenmodell (132) und damit die Ermittlung der ersten Heizeinrichtung und die für die einzelnen Heizeinrichtungen (120 - k) individuell vorgegebenen Wärmemengen während eines Walzprozesses an veränderte Prozessparameter, wie z.B. eine festgestellte veränderte Temperatur zwischen zwei Walzgerüsten, angepasst wird.

12. Verfahren nach einem der vorangegangenen Ansprüche 8 bis 11,
**dadurch gekennzeichnet,**
**dass** die Heizeinrichtungen (120 - k) bandkantenorientiert positioniert und über das Rechenmodell (132) so angesteuert werden, dass - quer zur Materialflussrichtung gesehen - an den überdurchschnittlich stark abgekühlten Kanten des Materials eine stärkere Wärmezufuhr als in der Mitte des Materials erfolgt.

13. Verfahren nach Anspruch 12,
**dadurch gekennzeichnet,**
**dass** die induktive Einstellung der Bandtemperatur innerhalb der Fertigstraße zur Beeinflussung der Bandplanheit und des Bandprofils eingesetzt wird und die Einflüsse in dem Profil-, Kontur- und Planheitsmodell beschrieben sowie die Position der induktiven Heizungen vorgegeben werden.

14. Verfahren nach einem der vorangegangenen Ansprüche,
**dadurch gekennzeichnet,**
**dass** das Wiederaufheizen mit Hilfe der Heizeinrichtungen (120 - k) induktiv erfolgt.

15. Fertigwalzstraße (100) umfassend:
eine Mehrzahl von in Materialflussrichtung aufeinander folgenden Walzgerüsten (110 - n) zum Warmwalzen von Eingangsmaterial (200) zu Bandmaterial, wobei das auf eine Einlauftemperatur (T_{E}) oberhalb eines unteren Temperaturschwellenwertes (T_{U}) aufgeheizte Eingangsmaterial (200) aufgrund von Wärmeverlusten in der Fertigwalzstraße (100) eine Abkühlung erfährt;
zumindest zwischen einzelnen der Walzgerüste (110 - n) angeordnete Heizeinrichtungen (120 - k); und
eine Steuereinrichtung (130) zum Ansteuern der Heizeinrichtungen (120 - k) so, dass die Wärmeverluste durch Wiederaufheizen des Materials (200) soweit kompensiert werden, dass die Endwalztemperatur (T_{A}) des Bandmaterials nach Verlassen der Fertigwalzstraße den vorgegebenen unteren Temperaturschwellenwert (T_{U}) nicht unterschreitet;
**dadurch gekennzeichnet,**
**dass** die Steuereinrichtung (130) ausgebildet ist,
a) diejenige der Heizeinrichtungen (120-k) zu ermitteln, auf deren Höhe oder hinter welcher - in Materialflussrichtung gesehen - die Temperatur des Materials aufgrund der Wärmeverluste in der Fertigungsstraße erstmals unter den unteren Temperaturschwellenwert (T_{U}) zu sinken droht; und
b) die so ermittelte Heizeinrichtung (120 -k) und ggf. die in Materialflussrichtung nachgeschalteten weiteren Heizeinrichtungen innerhalb der Fertigwalzstraße so anzusteuern, dass das Material jeweils nur soweit wiederaufgeheizt wird, dass seine Temperatur während des Weitertransports bis zu der in Materialflussrichtung gesehen jeweils nächsten nachgeschalteten Heizeinrichtung (120 - [k + 1]) - oder nach Passieren der letzen Heizeinrichtung bis zum Verlassen des Letzen der Walzgerüste (110 - n) - aufgrund der Wärmeverluste nur bis auf den unteren Temperaturschwellenwert (T_{U}) absinkt.

16. Fertigwalzstraße (100) nach Anspruch 15,
**dadurch gekennzeichnet,**
**dass** die Steuereinrichtung (130) weiterhin ausgebildet ist zur Durchführung des Verfahrens nach einem der Ansprüche 2 bis 14.

## Claims

1. Method of hot-rolling starting material (200) for a finishing rolling train (100), particularly of thin slabs or pre-strips, comprising the following steps:
introducing the starting material (200) heated to an entry temperature (T_{E}) above a predetermined lower temperature threshold value (T_{U}) into the finishing rolling train;
rolling the heated starting material (200) in a plurality of successive roll stands (110 - n) of the finishing rolling train to form strip material, particularly steel strip, wherein the material is cooled relative to the entry temperature (T_{E}) due to heat losses in the finishing rolling train (100); and
compensating for the heat losses by reheating the material at least between individual ones of the successive roll stands (110 - n) with the help of heating devices (120 - k) to such an extent that the temperature within the rolling train and the final rolling temperature (T_{A}) of the strip material on leaving the finishing rolling train (100) do not fall below the predetermined lower temperature threshold value (T_{U});
**characterised in that**
initially - as seen in material flow direction - that heating device (120 - k) is determined, with the help of a computer model (132) and/or on the basis of temperature measurement values from the interior of the finishing rolling train, at the level of which or behind which the temperature of the material threatens to sink for the first time below the lower temperature threshold value (T_{U}) due to the heat losses; and
the reheating of the material is calculated in advance or carried out with the help of the computer model **in that** the temperature of the material is increased with the help of the determined heating device (120 - k) only to such an extent that the temperature during further transport of the material up to the next downstream heating device (120 - [k + 1]) as seen in the material flow direction - or, if in the material flow direction there is no further heating device downstream, until leaving the finishing rolling train (100) - sinks due to the respective local heat losses in the finishing train only as far as the lower temperature threshold value (T_{U}); and
the reheating of the material is repeated with the help of each further heating device, which is downstream in material flow direction, within the finishing rolling train.

2. Method according to the preceding claim, **characterised in that** the temperature of the material during reheating within the rolling train is not raised above a predetermined upper temperature threshold value (To) lying above the lower temperature threshold value (T_{U}) and thus remains in a target temperature range (*ƒ*T) between the lower and upper temperature threshold values.

3. Method according to claim 2, **characterised in that** the target temperature range (*ƒ*T) is so selected in dependence on the kind of material used that the plot of the mean heat flow strength against the temperature for the material used has in the mathematical sense a local minimum in the target temperature range.

4. Method according to any one of the preceding claims, **characterised in that** the lower temperature threshold value (T_{U}) is predetermined in dependence on material and, for example, is set to approximately 900° C for low-carbonised austenitic rolled steels and to approximately 800° C for ferritic rolled steels.

5. Method according to any one of the preceding claims, **characterised in that** the starting material (200) before it is introduced into the finishing rolling train (100) is, if required, heated with the help of a preliminary heating device (120 - 0) to the entry temperature (T_{E}) above the lower temperature threshold value (T_{U}).

6. Method according to claim 5, **characterised in that** if between the first roll stand (110 - 1, 110 - 2, 110 - 3), as seen in the material flow direction, of the finishing rolling train an intermediate cooling (140) of the material (200) takes place the starting material before it is introduced into the finishing rolling train is heated with the help of the preliminary heating device (120 - 0) to such an entry temperature (T_{E}) that the material during transport thereof through the region of the intermediate stand cooling (140) until reaching a next heating device (120 - 3) downstream in the material flow direction is not cooled below the lower temperature threshold value (T_{U}) behind the region of the intermediate stand cooling.

7. Method according to any one of the preceding claims, **characterised in that** the determination of the heat level to the height of which or behind which the temperature of the material due to heat losses threatens to sink for the first time below the lower temperature threshold value (T_{U}) is calculated with the help of a computer model (132) and/or on the basis of temperature measurement values from the interior of the finishing rolling train.

8. Method according to any one of the preceding claims, **characterised in that** the quantity of heat, which is to be transferred for a reheating process by one of the heating devices (120 - k) individually in each instance to the transiting material, is calculated in advance, before the start of the rolling operation, with the help of a computer model (132) with consideration of the heat losses such as occur particularly in the transport of material between successive roll stands (110 - n) or between successive heating devices (120 - k) and during passage through the roll stands.

9. Method according to claim 8, **characterised in that** the computer model (132) calculates the heat losses with consideration of predetermined boundaries (133) for the roll stands of the finishing rolling train, for the heating devices as well as for the rolling process on the basis of predetermined process parameters, such as the kind of starting material used, for example the kind of steel used or the kind of aluminium used, the thickness of the starting material, the casting speed, the number of roll stands in the finishing rolling train, the spacing of the stands or the heating devices from one another, the measured temperature of the starting material at the exit of a strand guide device (320) and of the strip material at the outlet of the finishing rolling train, optionally the cooling performance of the intermediate stand cooling devices (140), optionally measured temperature values between the stands and/or predetermined increased temperature presets for the edges of the material, etc.

10. Method according to claim 7, 8 or 9, **characterised in that** the computer model (132) iteratively calculates the first heating device or the heat quantity, which is to be transmitted by the individual heating devices (120 - k) in each instance to the material (200), either on the basis of a forward calculation in material flow direction or a rearward calculation beginning with the final rolling temperature (T_{A}) of the strip material at the outlet of the finishing rolling train (100) oppositely to the material flow direction.

11. Method according to any one of the preceding claims 7 to 10, **characterised in that** the computer model (132) and therewith the determination of the first heating device and the heat quantities individually predetermined for the individual heating devices (120 - k) are adapted during a rolling process to changed process parameters such as, for example, an ascertained changed temperature between two roll stands.

12. Method according to any one of the preceding claims 8 to 11, **characterised in that** the heating devices (120 - k) are positioned with orientation to the strip edges and are so controlled by way of the computer model (132) that, as seen transversely to the material flow direction, a stronger heat feed takes place at the edges of the material strongly cooled above average than in the centre of the material.

13. Method according to claim 12, **characterised in that** the inductive setting of the strip temperature within the finishing train is used for influencing strip planarity and strip profile and the influences described in the profile, contour and planarity model as well as the position of the inductive heating means are predetermined.

14. Method according to any one of the preceding claims, **characterised in that** the reheating takes place inductively with the help of the heating devices (120 - k).

15. Finishing train (100) comprising:
a plurality of roll stands (110 - n), which are successive in material flow direction, for the hot-rolling of starting material (200) to form strip material, wherein the starting material (200) heated to an entry temperature (T_{E}) above a lower temperature threshold value (T_{U}) experiences cooling due to heat losses in the finishing rolling train (100);
heating devices (120 - k) arranged at least between individual ones of the roll stands (110 - n); and
a control device (130) for controlling the heating devices (120 - k) so that compensation for the heat losses by reheating the material (200) is provided to the extent that the final rolling temperature (T_{A}) of the strip material after leaving the finishing rolling train does not fall below the predetermined lower temperature threshold value (T_{U});
**characterised in that**
the control device (130) is constructed
a) to determine that one of the heating devices (120 - k) at the level of which or behind which - as seen in material flow direction - the temperature of the material threatens to sink for the first time below the lower temperature threshold value (T_{U}) due to the heat losses in the finishing train; and
b) to so control the thus-determined heating device (120 - k) and optionally the further heating devices downstream in material flow direction within the finishing rolling train that the material in each instance is reheated only to the extent that the temperature thereof during further transport up to the respective next downstream heating device (120 - [k + 1]) as seen in the material flow direction - or after passing the last heating device up to departure from the last one of the roll stands (110 - n) - drops due the heat losses only as far as the lower temperature threshold value (T_{U}).

16. Finishing rolling train (100) according to claim 15, **characterised in that** the control device (130) is additionally constructed for performance of the method according to any one of claims 2 to 14.

## Revendications

1. Procédé pour le laminage à chaud d'un matériau de départ (200) pour un train finisseur (100), en particulier de brames minces ou de feuillards précurseurs, comprenant les étapes suivantes consistant à :
introduire le matériau de départ (200) à l'état chauffé à une température de départ (T_{E}) supérieure à une valeur seuil de température inférieure prédéfinie (Tu) dans le train finisseur ; laminer le matériau de départ chauffé (200) dans plusieurs cages de laminoir qui se suivent l'une l'autre (110 - n) du train finisseur pour obtenir un matériau en forme de feuillard, en particulier un feuillard d'acier, le matériau étant refroidi, sur base de pertes de chaleur dans le train finisseur (100), par rapport à la température de départ (T_{E}); et compenser les pertes de chaleur par réchauffement du matériau au moins entre un certain nombre de cages parmi les cages de laminoir qui se suivent l'une l'autre (110 - n) à l'aide de mécanismes de chauffage (120 - k), dans une mesure telle que la température au sein du train de laminage et la température de fin de laminage (T_{A}) du matériau en forme de feuillard lorsque ce dernier quitte le train finisseur (100) ne dépasse pas vers le bas la valeur seuil de température inférieure prédéfinie (T_{U}); **caractérisé en ce que** dans un premier temps - lorsqu'on regarde dans la direction d'écoulement du matériau - à l'aide d'un modèle de calcul (132) et/ou sur base de valeurs de mesure de la température à partir de l'intérieur du train finisseur, on détermine le mécanisme de chauffage (120 - k) à hauteur duquel ou derrière lequel la température du matériau menace, sur base des pertes de chaleur, pour la première fois de tomber en dessous de la valeur seuil de température inférieure (Tu) ; et **en ce que** le réchauffement du matériau à l'aide du module de calcul est calculé au préalable, respectivement a lieu par le fait que la température du matériau, à l'aide du mécanisme de chauffage déterminé (120 - k), n'est élevée que jusqu'à un point tel que la température, au cours du transport ultérieur du matériau jusqu'au mécanisme de chauffage suivant (120 - k) monté à la suite, vu dans la direction d'écoulement du matériau ou bien - lorsque plus aucun mécanisme de chauffage supplémentaire n'est monté à la suite dans la direction d'écoulement du matériau, jusqu'à ce que ce dernier quitte le train finisseur (100) - sur base des pertes de chaleur locales respectives dans le train finisseur, ne descende pas plus bas que la valeur seuil de température inférieure (Tu) ; et **en ce qu'**on répète le réchauffement du matériau à l'aide de chaque mécanisme de chauffage supplémentaire monté à la suite dans la direction d'écoulement du matériau, au sein du train finisseur.

2. Procédé selon l'une quelconque des revendications précédentes, **caractérisé en ce que** la température du matériau, lors du réchauffement à l'intérieur du train de laminage, n'est pas portée au-delà d'une valeur seuil de température supérieure prédéfinie (T_{O}), qui est supérieure à la valeur seuil de température inférieure (Tu), et reste par conséquent dans une plage de températures cible (ΔT) entre la valeur seuil de température inférieure et la valeur seuil de température supérieure.

3. Procédé selon la revendication 2, **caractérisé en ce que** la plage de températures cible (ΔT) est sélectionnée à chaque fois en fonction du matériau utilisé, de telle sorte que l'allure de la résistance moyenne à l'écoulement à chaud présente, via la température pour le matériau utilisé, mathématiquement parlant, un minimum local dans la plage de températures cible.

4. Procédé selon l'une quelconque des revendications précédentes, **caractérisé en ce que** la valeur seuil de température inférieure (Tu) est prédéfinie en fonction du matériau et est réglée, par exemple pour des aciers à faible teneur en carbone et soumis à un laminage en mode austénitique, à environ 900 °C et pour des aciers soumis à un laminage en mode ferritique, à environ 800°C.

5. Procédé selon l'une quelconque des revendications précédentes, **caractérisé en ce que** le matériau de départ (200), avant son introduction dans le train finisseur (100), est chauffé en cas de nécessité à l'aide d'un dispositif de préchauffage (120 - 0) à la température de départ (T_{E}) supérieure à la valeur seuil de température inférieure (T_{U}).

6. Procédé selon la revendication 5, **caractérisé en ce que**, lorsqu'on prévoit, entre les premières cages de laminoir (110-1, 110-2, 110-3) du train finisseur, lorsqu'on regarde dans la direction d'écoulement du matériau, un refroidissement intermédiaire (140) du matériau (200), on chauffe le matériau de départ avant son introduction dans le train finisseur, à l'aide du dispositif de préchauffage (120 - 0), à une température de départ (T_{E}) telle que le matériau, au cours de son transport à travers la zone du refroidissement intermédiaire en cage (140) jusqu'à ce qu'il atteigne un mécanisme de chauffage suivant (120 - 3) monté à la suite, lorsqu'on regarde dans la direction d'écoulement du matériau, derrière la zone du refroidissement intermédiaire en cage, n'est pas refroidi jusqu'à une valeur inférieure à la valeur seuil de température inférieure (Tu).

7. Procédé selon l'une quelconque des revendications précédentes, **caractérisé en ce que** la détermination du niveau de chauffage à hauteur duquel ou derrière lequel la température du matériau menace, sur base des pertes de chaleur, pour la première fois de tomber en dessous de la valeur seuil de température inférieure (Tu), est calculée à l'aide d'un modèle de calcul (132) et/ou sur base de valeurs de mesure de la température à partir de l'intérieur du train finisseur.

8. Procédé selon l'une quelconque des revendications précédentes, **caractérisé en ce que** la quantité de chaleur à transférer à chaque fois de manière individuelle au matériau qui s'écoule, pour un processus de réchauffement à partir d'un des mécanismes de chauffage (120 - k), est calculée au préalable, avant le processus de laminage, à l'aide d'un modèle de calcul (132) en prenant en compte les pertes de chaleur telles qu'elles apparaissent en particulier lors du transport du matériau entre des cages de laminoir (110 - n) qui se suivent l'une l'autre ou bien entre des mécanismes de chauffage (120 - k) qui se suivent l'un l'autre et lors de son passage par les cages de laminoir.

9. Procédé selon la revendication 8, **caractérisé en ce que** le modèle de calcul (132) calcule les pertes de chaleur en prenant en compte des limites prédéfinies (133) pour les cages de laminoir du train finisseur, pour les mécanismes de chauffage ainsi que pour le processus de laminage, sur base de paramètres opératoires prédéfinis tels que le type du matériau de départ utilisé, par exemple du type d'acier utilisé ou du type de l'aluminium utilisé, l'épaisseur du matériau de départ, la vitesse de coulée, le nombre de cages de laminoir dans le train finisseur, l'écart réciproque entre les cages ou entre les mécanismes de chauffage, la température mesurée du matériau de départ à la sortie d'un mécanisme de guidage de la barre de coulée continue (320) et du matériau en forme de feuillard à la sortie du train finisseur, le cas échéant la puissance de refroidissement des mécanismes de refroidissement intermédiaire en cage (140), des valeurs de température mesurées de manière facultative entre les cages et/ou des élévations de température de consigne prédéfinies pour les arêtes du matériau, etc.

10. Procédé selon la revendication 7, 8 ou 9 **caractérisé en ce que** le modèle de calcul (132) calcule par itération le premier mécanisme de chauffage ou la quantité de chaleur à transmettre à chaque fois au matériau (200) à partir des mécanismes de chauffage individuels (120 - k), sur base soit d'un calcul vers l'avant dans la direction d'écoulement du matériau, soit d'un calcul vers l'arrière en commençant avec la température de laminage final (T_{A}) du matériau en forme de feuillard à la sortie du train finisseur (100) à l'encontre de la direction d'écoulement du matériau.

11. Procédé selon l'une quelconque des revendications 7 à 10, **caractérisé en ce qu'**on adapte le modèle de calcul (132), partant la détermination du premier mécanisme de chauffage, et les quantités de chaleur prédéfinies de manière individuelle pour les mécanismes de chauffage particuliers (120 - k), au cours d'un processus de laminage, à des paramètres opératoires modifiés comme par exemple une modification de température constatée entre deux cages de laminoir.

12. Procédé selon l'une quelconque des revendications 8 à 11, **caractérisé en ce qu'**on dispose les mécanismes de chauffage (120 - k) d'une manière telle qu'on les oriente dans la direction des arêtes du feuillard et **en ce qu'**on les excite via le modèle de calcul (132) de telle sorte que l'on obtient - lorsqu'on regarde en direction transversale par rapport à la direction d'écoulement du matériau - aux arêtes du matériau soumises à un refroidissement marqué supérieur à la moyenne un apport de chaleur plus intense qu'au milieu du matériau.

13. Procédé selon la revendication 12, **caractérisé en ce que** le réglage par induction de la température du feuillard au sein du train finisseur est mis en oeuvre pour influencer la planéité du feuillard et le profil du feuillard, les influences étant décrites dans le modèle de profil, de contour et de la planéité, et la position des chauffages par induction étant prédéfinie.

14. Procédé selon l'une quelconque des revendications précédentes, **caractérisé en ce que** le réchauffement à l'aide des mécanismes de chauffage (12 - k) a lieu par induction.

15. Train finisseur (100) comprenant : une multitude de cages de laminoir (110 - n) qui se suivent l'une l'autre dans la direction d'écoulement du matériau pour le laminage à chaud d'un matériau de départ (200) afin d'obtenir un matériau en forme de feuillard, le matériau de départ (200) chauffé à une température de départ (T_{E}) supérieure à une valeur seuil de température inférieure (Tu) subissant un refroidissement sur base de pertes de chaleur dans le train finisseur (100) ; des mécanismes de chauffage (120 - k) disposés au moins entre un certain nombre de cages parmi les cages de laminoir (110 - n) ; et un mécanisme de commande (130) pour l'excitation des mécanismes de chauffage (120 - k) de telle sorte que l'on obtient une compensation des pertes de chaleur, par réchauffement du matériau (200), telle que la température de laminage finale (T_{A}) du matériau en forme de feuillard, une fois qu'il a quitté le train finisseur, ne dépasse pas vers le bas la valeur seuil de température inférieure prédéfinie (Tu) ; **caractérisé en ce que** le mécanisme de commande (130) est réalisé: a) pour déterminer le mécanisme de chauffage (120 - k), parmi les mécanismes de chauffage (120 - k), à hauteur duquel ou derrière lequel - lorsqu'on regarde dans la direction d'écoulement du matériau - la température du matériau menace, sur base des pertes de chaleur dans le train finisseur, pour la première fois de tomber en dessous de la valeur seuil de température inférieure (Tu) ; et b) pour exciter le mécanisme de chauffage (120 - k) ainsi déterminé et le cas échéant les mécanismes de chauffage supplémentaires montés à la suite dans la direction d'écoulement du matériau, au sein du train finisseur, de telle sorte que l'on ne réchauffe à chaque fois le matériau qu'à un point tel que sa température, au cours du transport ultérieur jusqu'au mécanisme de chauffage respectif suivant (120 - [k +1]) monté à la suite, lorsqu'on regarde dans la direction d'écoulement du matériau, ou bien, après son passage par le dernier mécanisme de chauffage et jusqu'à ce qu'il quitte la dernière cage de laminoir (110 - n), sur base des pertes de chaleur, ne descende que jusqu'à la valeur seuil de température inférieure (T_{U}).

16. Train finisseur (100) selon la revendication 15, **caractérisé en ce que** le mécanisme de commande (130) est en outre réalisé pour la mise en oeuvre du procédé selon l'une quelconque des revendications 2 à 14.
